# FASCICULE DE BREVET EUROPEEN

(11) **EP 0 511 083 B1**
(45) Date de publication et mention de la délivrance du brevet: **24.01.1996**
(21) Numéro de dépôt: 92401124.0
(22) Date de dépôt: 21.04.1992
(51) Int. Cl.: H04B 10/16

(54) **Système de télécommunication à amplificateurs optiques à fibre pour la transmission de signaux à longues distances**
Optisches Nachrichtenübertragungssystem mit faseroptischen Verstärkern für die Signalübertragung über weite Entfernungen
Optical fibre amplifiers telecommunications system for long distance signal transmission

(30) Priorité: 22.04.1991 FR 9104930
(43) Date de publication de la demande: 28.10.1992
(73) Titulaire: ALCATEL N.V., NL-1077 XX Amsterdam (NL)
(72) Inventeur: Auge, Jacques, F-91530 Saint Cheron (FR); Blondel, Jean-Pierre, F-78220 Viroflay (FR); Fevrier, Hervé, F-91300 Massy (FR); Marcerou, Jean-François, F-91080 Courcouronnes (FR)
(74) Mandataire: Laroche, Danièle

(56) Documents cités:
- EP-A- 0 368 196
- ELECTRONICS LETTERS, vol. 27, no. 2, 17 Janvier 1991, STEVENAGE GB pages 146 - 148; Y.KIMURA ET AL: 'Noise figure characteristics of Er3+-doped fibre amplifier pumped in 0.8 micrometer band'
- ELECTRONICS LETTERS, vol. 26, no. 14, 5 Juillet 1990, STEVENAGE,GB pages 1038 - 1039; J. F. MASSICOTT ET AL: 'Efficient, high power, high gain, Er 3+ doped silica fibre amplifier'
- IEEE INTERNATIONAL CONFERENCE ON COMMUNICATIONS SUPERCOMM ICC 90 vol. 1, 15 Avril 1990, GEORGIA,ATLANTA,US pages 177 - 182; M.Z.IQBAL ET AL: 'Performance of Multi-gigabit/sec Transmission Systems Using Erbium Doped Fiber Amplifiers'
- ELECTRONICS LETTERS, vol. 25, no. 7, 30 Mars 1989, STEVENAGE GB pages 455 - 456; R.I.LAMING ET AL: 'Multichannel crosstalk and pump noise characterisation of Er3+-doped fibre amplifier pumped at 980 nm'

## Description

La présente invention concerne un système de télécommunications à amplificateurs optiques à fibre dopée à l'erbium pour la transmission à longues distances de signaux de longueur d'onde 1550 nanomètres, trouvant notamment une application dans les télécommunications sous-marines.

On a déjà proposé, pour des liaisons de plusieurs milliers de kilomètres, des systèmes comportant en cascade des amplificateurs optiques à fibre optique dopée à l'erbium.

L'article paru dans Electronic Letters 17 th January 1991 Vol.27 n° 2 : "Demonstration of transmission at 2.4 Gbit/s over 12.000 Km" par L.F. Mollenauer, B.M. Nyman, M.J. Neubelt, G. Raybon, S.G. Evangelides, montre une liaison de 12.000 Km avec des signaux de longueurs d'ondes 1531,9 nm.

L'article référencé - ECOC' 89, post deadline paper, PDA-8, Gothenburg 1989 - "Non-regenerative optical transmission experiment using 12 Er. doped Fibre Amplifiers" par Noboru Edegava, Yoshihiro Yoshida, Hidenori Taga, Shu Yamamoto, Kiyofumi Mochizuki, and Hiroharu Wakabayashi, décrit une liaison de 902 Km avec des signaux de longueur d'onde 1536 nm.

L'article paru dans "Electronic Letters, 17 th January 1991, Vol.27 n° 2 : "Demonstration of optical pulse propagation over 10.000 Km of fibre using recirculating loop" par D.J. Malyon, T. Widdowson, E.G. Bryant, S.F. Carter, J.V. Wright, W.A. Stallard, s'intéresse à une liaison de 10.000 Km avec des signaux de 1560 nm.

Tous les systèmes proposés ci-dessus comportent des amplificateurs dont les fibres optiques ont des coeurs de silice dopés soit par de l'aluminium et de l'erbium, soit par de l'aluminium, du germanium et de l'erbium. Il ne paraît pas nécessaire d'interposer des filtres optiques entre les amplificateurs de tels systèmes.

Par contre, si on utilise des amplificateurs optiques du type précédent pour la transmission de signaux de longueurs d'onde de l'ordre de 1550 nm, il est indispendable de mettre entre les amplificateurs des filtres optiques pour limiter le bruit. Un système de ce genre est décrit dans l'article de Shigeru Saito, Takamasa Imai, Toshihiko Sugie, Norio Ohkawa, Yasutaka Ichihashi, and Takeshi Ito : "An over 2200 Km coherent transmission experiment at 2.5 Gbit/s using erbium - doped fiber amplifiers", OFC' 90 San Francisco, PD2 - 1.

La présente invention a pour but la mise en oeuvre d'un système susceptible de transmettre des signaux à 1550 nm, ne nécessitant pas de filtres optiques intermédiaires trop délicats à adapter, et utilisable dans des liaisons à très longue distance, par exemple transatlantiques.

La présente invention a pour objet un système de télécommunications à amplificateurs optiques à fibre dopée à l'erbium pour la transmission de signaux dont au moins un a une longueur d'onde de l'ordre de 1550 nm, caractérisé par le fait :
- que lesdits amplificateurs ont des fibres dont les coeurs sont dopés à l'erbium et au germanium et sont exempts d'aluminium,
- et que, pour chacun desdits amplificateurs, la longueur de ladite fibre et la puissance de pompe qui lui est injectée sont telles que le bruit généré par ladite fibre est émis essentiellement autour de 1550 nm.

Dans un tel système de télécommunications les amplificateurs optiques précédemment définis présentent de manière tout à fait surprenante une fonction d'autofiltrage autour de 1550 nm.

Ainsi un signal dont la longueur d'onde est de 1550 ± 4 nm profite du même gain que le bruit et ne souffre pas de la compétition avec lui ; le système selon l'invention peut être utilisé pour des liaisons dépassant 10 000 Km.

Dans un système selon l'invention, on peut envisager de mettre en oeuvre des amplificateurs précédemment définis avec un espacement pouvant aller jusqu'à 300 kilomètres, sans filtres optiques intermédiaires.

A titre d'exemple les taux de dopage du coeur des fibres mises en oeuvre sont tels que l'on a :
- taux de germanium : supérieur à 2%
- taux d'erbium : compris entre 0,1 ppb et 500 ppm.

Chaque amplificateur a une fibre d'une longueur comprise entre 1 mètre et 60 Km. La puissance de pompe injectée dans la fibre dopée à l'erbium est comprise entre 2 mW et 300 mW, à une longueur d'onde de 980 ± 40 nm et/ou 1480 nm ± 40 nm.

D'autres caractéristiques et avantages de la présente invention apparaîtront au cours de la description suivante de modes de réalisation donnés à titre illustratif mais nullement limitatif.

Dans le dessin annexé :
- La figure 1 illustre les résultats donnés par un système de l'art antérieur, variations en fonction de la longueur L (Km) de la puissance Ps(dBm) du signal à 1550 nm issu des amplificateurs, et du niveau de bruit correspondant Nb(dBm/nm).
- La figure 2 montre le spectre du signal émis par un système selon l'invention au bout de 1000 Km : I (Log, unité arbitraire) en fonction de λ (nm).
- La figure 3 est analogue à la figure 2, mais correspond à une distance de 10.000 Km.
- La figure 4 est analogue à la figure 1, mais pour un système selon l'invention.

On compare ici un système de l'art antérieur et un système selon l'invention comprenant chacun tous les cinquante kilomètres un amplificateur optique à fibre optique dopée à l'erbium.

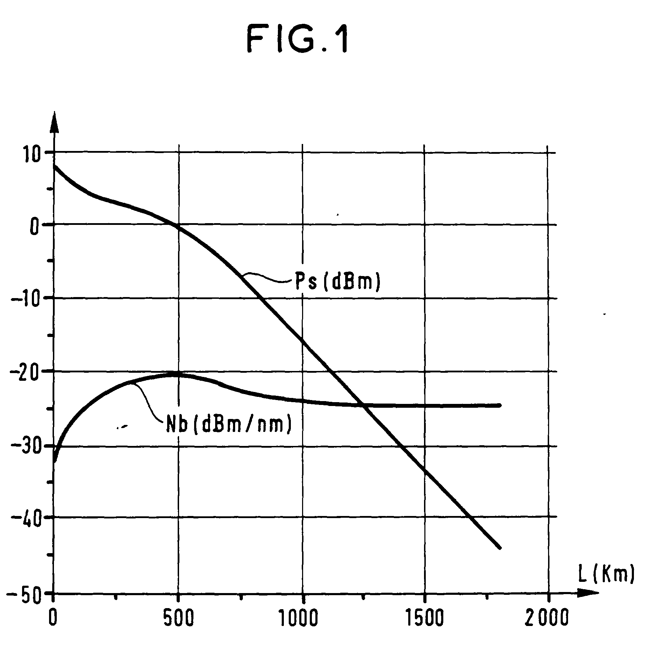

Les résultats du système de l'art antérieur avec un signal d'entrée à 1550 nm apparaissent dans la figure 1. On constate qu'au bout de 1250 Km environ le rapport signal sur bruit devient insuffisant.

Dans le système selon l'invention chaque amplificateur optique possède une fibre dopée de la manière suivante :
- taux de germanium : supérieur à 2 %
- taux d'erbium : compris entre 0,1 ppb et 500 ppm.

La longueur de la fibre est de 25 mètres ; la puissance de pompe injectée est de 6 mW à une longueur d'onde voisine de 1480 nm.

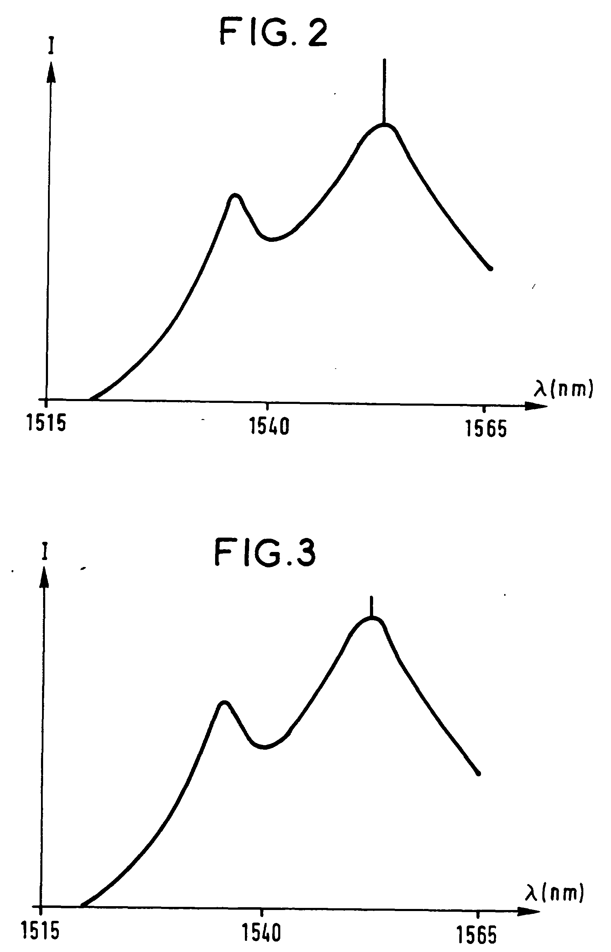

La figure 2 montre le spectre du signal après une propagation de 1000 Km.

La figure 3 montre le spectre du signal après une propagation de 10.000 Km.

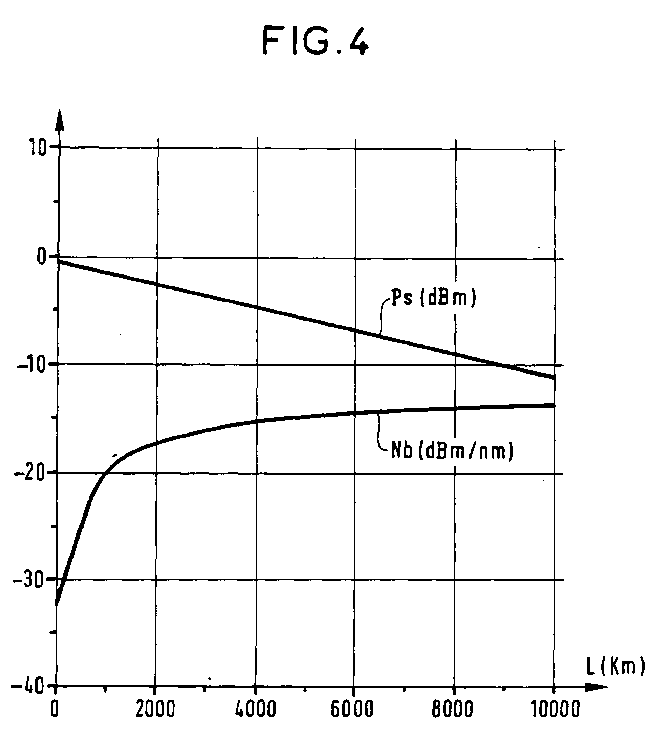

La figure 4 montre l'évolution de la puissance Ps du signal en fonction de la distance parcourue L(Km), ainsi que le niveau de bruit Nb correspondant.

Les amplificateurs mis en oeuvre dans le système selon l'invention présentent une fonction d'autofiltrage autour de 1550 nm. Le pic de bruit généré aux alentours de 1532 nm, visible dans les figures 2 et 3 est réabsorbé dans les fibres et un autre pic de bruit apparaît à 1550 nm. Les amplificateurs optiques du système selon l'invention transfèrent donc préférentiellement de l'énergie aux alentours de 1550 nm. Le signal accroché à ce pic d'amplification profite du même gain que le bruit et ne souffre pas de la compétition avec lui. Le comportement général obtenu est le même que si un filtre était placé après chaque amplificateur, ce qui justifie le terme d'autofiltrage.

Comme le montrent les courbes de la figure 4, le rapport signal sur bruit reste suffisant après 10.000 Km de propagation, sans mise en oeuvre de filtre optique intermédiaire.

Bien entendu l'invention n'est pas limitée au mode de réalisation qui vient d'être décrit. On pourra, sans sortir du cadre de l'invention, remplacer tout moyen par un moyen équivalent.

Ainsi les distances entre les amplificateurs peuvent être différentes de la valeur mentionnée dans l'exemple précédent ; les puissances de pompe ainsi que les longueurs de fibre dopée à l'erbium seront ajustées en conséquence. Le cas extrême de "l'amplification distribuée" où toute la fibre utilisée dans le système est dopée à l'erbium et où des pompes sont placées de loin en loin, est également envisageable. Un pompage autour de 980 nm est aussi possible.

Selon une autre variante de réalisation, les amplificateurs d'un système selon l'invention peuvent ne pas être tous identiques et la puissance de sortie peut ne pas être constante, notamment si un asservissement sur la puissance du signal de sortie est réalisé. Les distances entre les amplificateurs peuvent là encore ne pas être constantes.

## Revendications

1. Système de télécommunications à amplificateurs optiques à fibre dopée à l'erbium pour la transmission de signaux dont au moins un a une longueur d'onde de l'ordre de 1550 nm, caractérisé par le fait :
- que lesdits amplificateurs ont des fibres dont les coeurs sont dopés à l'erbium et au germanium et sont exempts d'aluminium,
- et que, pour chacun desdits amplificateurs, la longueur de ladite fibre et la puissance de pompe qui lui est injectée sont telles que le bruit généré par ladite fibre est émis essentiellement autour de 1550 nm.

2. Système de télécommunications selon la revendication 1, caractérisé par le fait que la distance entre deux desdits amplificateurs est comprise entre 0 et 300 Km, la valeur 0 correspondant à une amplification dite "distribuée".

3. Système de télécommunications selon l'une des revendications précédentes, caractérisé par le fait que le dopage des fibres est tel que le taux de germanium soit supérieur à 2% et le taux d'erbium soit compris entre 0,1 ppb et 500 ppm.

4. Système de télécommunications selon la revendication 3, caractérisé par le fait que, dans chacun desdits amplificateurs, la longueur de la fibre dopée est comprise entre 1 m et 60 Km et que la puissance de pompe est comprise entre 2 mW et 300 mW à une longueur d'onde de 980 nm ± 40 nm et/ou 1480 nm ± 40 nm.

## Patentansprüche

1. Nachrichtensystem mit optischen Verstärkern, die eine mit Erbium dotierte Lichtleitfaser enthalten, für die Übertragung von Signalen, von denen mindestens eines eine Wellenlänge in der Größenordnung von 1550 nm besitzt, dadurch gekennzeichnet,
- daß die Verstärker Lichtleitfasern besitzen, deren Kern mit Erbium und Germanium, aber nicht mit Aluminium dotiert ist,
- und daß für jeden der Verstärker die Länge der Lichtleitfaser und die in sie eingespeiste Pumpleistung so gewählt sind, daß das von der Faser erzeugte Rauschen im wesentlichen im Umkreis von 1550 nm ausgesendet wird.

2. Nachrichtensystem nach Anspruch 1, dadurch gekennzeichnet, daß der Abstand zwischen zwei Verstärkern zwischen 0 und 300 km liegt, wobei der Wert 0 km einer "verteilten Verstärkung" entspricht.

3. Nachrichtensystem nach einem der vorhergehenden Ansprüche, dadurch gekennzeichnet, daß die Dotierung der Fasern so gewählt ist, daß die Dotierungsrate für Germanium größer als 2% ist und die für Erbium zwischen 0,1 ppb und 500 ppm liegt.

4. Nachrichtensystem nach Anspruch 3, dadurch gekennzeichnet, daß in jedem der Verstärker die Länge der dotierten Faser zwischen 1 m und 60 km beträgt und daß die Pumpleistung zwischen 2 mW und 300 mW bei einer Wellenlänge von 980 nm ± 40 nm und/oder 1480 nm ±40 nm liegt.

## Claims

1. A telecommunications system having erbium-doped fiber optical amplifiers for transmitting signals including at least one signal at a wavelength of about 1550 nm, the system being characterized by the facts that:
said amplifiers are fibers whose cores are doped with erbium and germanium and are free from aluminum; and
for each of said amplifiers, the length of said fiber and the pumping power which is injected therein are such that the noise generated by said fiber is generally emitted around 1550 nm.

2. A telecommunications system according to claim 1, characterized by the fact that the distance between two of said amplifiers lies in the range 0 to 300 km, where the value 0 corresponds to a so-called "distributed" amplification.

3. A telecommunications system according to any preceding claim, characterized by the fact that the fibers are doped in such a manner that the germanium concentration is greater than 2% and the erbium concentration lies in the range 0.1 ppb to 500 ppm.

4. A telecommunications system according to claim 3, characterized by the fact that the length of doped fiber in each of said amplifiers lies in the range 1 m to 60 km, and that the pumping power lies in the range 2 mW to 300 mW at a wavelength of 980 nm ± 40 nm and/or of 1480 nm ± 40 nm.
